# EUROPÄISCHE PATENTSCHRIFT

(11) **EP 2 229 510 B1**
(45) Veröffentlichungstag und Bekanntmachung des Hinweises auf die Patenterteilung: **04.04.2012**
(21) Anmeldenummer: 08870122.2
(22) Anmeldetag: 22.12.2008
(51) Int. Cl.: F01N 3/28, B01J 35/04, F01N 3/022

(54) **WABENKÖRPER MIT STRUKTURIERTEM BLECHMATERIAL**
HONEYCOMB BODY WITH STRUCTURED SHEET MATERIAL
CORPS ALVÉOLÉ AVEC MATÉRIAU MÉTALLIQUE STRUCTURÉ

(30) Priorität: 09.01.2008 DE 102008003658
(43) Veröffentlichungstag der Anmeldung: 22.09.2010
(73) Patentinhaber: Emitec Gesellschaft für Emissionstechnologie mbH, 53797 Lohmar (DE)
(72) Erfinder: WIERES, Ludwig, 51491 Overath (DE); SEELIGER, Stefan, 99947 Alterstedt (DE)
(74) Vertreter: Rössler, Matthias
(86) Internationale Anmeldenummer: PCT/EP2008/068142
(87) Internationale Veröffentlichungsnummer: WO 2009/087054

(56) Entgegenhaltungen:
- EP-A- 1 329 602
- WO-A-02/00326
- WO-A-2004/072446
- JP-A- 5 033 636
- JP-A- 11 128 683
- JP-A- 63 296 844
- US-A1- 2005 054 526

## Beschreibung

Die vorliegende Erfindung betrifft einen Wabenkörper mit einem Gehäuse und einer Wabenstruktur für ein Abgasreinigungssystem mit einem Blechmaterial, das in einem Abschnitt Erhebungen und eine die Erhebungen umgebende Randkontur aufweist. Weiter betrifft die vorliegende Erfindung die Verwendung solcher Wabenköper im Automobilbereich.

Aus dem Stand der Technik ist eine Vielzahl von unterschiedlich ausgestalteten metallischen Abgasreinigungskomponenten bekannt, die für ihre einzelnen Komponenten verschiedenste metallische Materialien und/oder Formen vorschlagen. Dabei kommen die Blechmaterialien z. B. als Bestandteil eines Gehäuses, als Manschette, als Zwischenlage oder auch zur Herstellung der Wabenstruktur aus dünnen Blechfolien in glatter oder strukturierter Form zum Einsatz.

Für den Bereich der Gehäuse ist bekannt, Rillen, Furchen oder dergleichen auf der Innenseite vorzusehen, die den Lotmittelfluss zwischen Gehäuse und Wabenstruktur beeinflussen sollen. Für die Folien, die zum Aufbau der Wabenstruktur vorgeschlagen werden, ist auch bekannt, Leitschaufeln und/oder Mikrostrukturen vorzusehen, die eine lokale Strörnungsbeeinflussung (z. B. Umlenkung) des Abgases im Kanalinneren bewirken.

Aus der WO 02/00326 A2 sind eine Partikelfalle und ein Verfahren zum Abscheiden von Partikeln aus dem Strom eines Fluids bekannt. Dazu werden Einbauten in Form von Umlenk- oder Leitstrukturen in den Strömungskanal eingebracht, die die Partikel aus dem Fluid bei bestimmten Geschwindigkeiten gegen eine poröse Wand lenken, wo diese haften bleiben. In der Partikelfalle wird die Abscheidung der Partikel nach dem Prinzip "Schläger" und "Fänger" realisiert, wobei die Umlenkstruktur als "Schläger" dient und die Partikel zum "Fänger", der porösen Kanalwand oder Zwischenschicht, hinlenkt. Dabei können die Umlenkstrukturen innerhalb eines Strömungskanals gleich oder ungleich sein, ebenso wie die Strukturierung der Strömungskanäle innerhalb einer Partikelfalle variieren kann.

Die JP 11-128683 beschreibt eine Metallfolie zum Einsatz in Abgasreinigungsanlagen, die kleine Erhebungen auf ihrer gesamten Oberfläche aufweist, so dass sie spiralförmig aufgewickelt werden kann und durch die Erhebungen voneinander beabstandete Kanalwände bildet.

Die JP 05-033636 zeigt eine metallische Folie für einen Katalysator, die in Teilbereichen beulenförmige Strukturierungen mit mittigen Ausbrüchen aufweist, die zur Beeinflussung der Abgasströmung zwischen derartigen Metallfolien geeignet sind.

In der JP 63-296844 wird eine strukturierte metallische Folie mit partiellen Erhebungen bzw. Senken zur Beabstandung der metallischen Folien voneinander beschrieben. Weiterhin wird hier auch ein Fertigungsverfahren für wechselseitig vorliegende Erhebungen vorgestellt.

In der EP 1 329 602 wird eine strukturierte Metallfolie mit Erhebungen und flachen Bereichen gezeigt, wobei z.B. die flachen Bereiche die Erhebungen umgeben. Es ist jedoch offensichtlich, dass die Erhebungen nicht einen Flächenanteil von mindestens 80 % der gesamten Oberfläche umfassen.

In der US 2005/0054526 wird eine Metallfolie mit periodisch vorgesehenen Öffnungen gezeigt, welche Verbindungen zwischen unterschiedlichen Strömungskanälen in einem Wabenkörper ermöglichen sollen.

In der WO 2004/072446 wird ein Verfahren und einen Werkzeug zur Herstellung einer strukturierten Metallfolie mit Öffnungen vorgeschlagen. Trotz der bereits existierenden Vielfalt auf diesem technischen Gebiet, konnten noch nicht alle Anforderungen hinsichtlich eines stabilen, strömungstechnisch günstig gestalteten und kostengünstig bzw. materialschonend herzustellenden Wabenkörpers erreicht werden. Insoweit besteht hier weiterer Bedarf nach Verbesserungen.

Durch die vorliegende Erfindung sollen die mit Bezug auf den Stand der Technik geschilderten Probleme wenigstens teilweise gemindert werden und insbesondere ein Wabenkörper bereitgestellt werden, der durch den Einsatz eines besonderen Blechmaterials leichter und kompakter ausgeführt werden kann, wobei gleichzeitig eine hohe Effizienz der Abgasreinigung gewährleistet ist und eine kostengünstige Fertigung des Wabenkörpers ermöglicht wird.

Diese Aufgaben werden gelöst mit einem Wabenkörper gemäß den Merkmalen des Patentanspruchs 1. Weitere vorteilhafte Ausgestaltungen sowie eine bevorzugte Verwendung der Erfindung sind in den abhängig formulierten Patentansprüchen angegeben. Es ist darauf hinzuweisen, dass die in den abhängig formulierten Patenansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorliegend wird ein Wabenkörper mit wenigstens einem Gehäuse und einer Wabenstruktur für ein Abgasreinigungssystem vorgeschlagen, der zumindest ein Blechmaterial aufweist, wobei das Blechmaterial dem Abschnitt Erhebungen und eine die Erhebungen umgebende Randkontur aufweist und ein Flächenanteil der Erhebungen in dem Abschnitt zumindest 80 % beträgt.

Weiter kann der Wabenkörper so gestaltet sein, dass die Strukturfolie eine Blechdicke und die Erhebungen, gemessen ausgehend von der Randkontur der Strukturfolie, eine Höhe aufweisen, wobei die Höhe maximal dem 4 fachen der Blechdicke entspricht, bevorzugt maximal dem 3-fachen. Beim Einsatz des Blechmaterials als Strukturfolie werden hier insbesondere Blechdicken eingesetzt, die im Bereich von 30 µm bis 120 µm, insbesondere in einem Bereich von 60 bis 80 µm, liegen. Die Limitierung der Höhe der Erhebungen soll insbesondere einen schonenden Umformvorgang gewährleisten und die hier beschriebenen Effekte (wie die Wirbelströmung ohne großen Druckverlust) erzeugen.

Zudem kann das Blechmaterial ein Gehäuse des Wabenkörpers bilden. Insbesondere bei der Verwendung als Gehäuse ergibt sich durch die besondere Ausgestaltung des Blechmaterials durch Erhebungen und Randkonturen eine hohe Formstabilität, die bis zu 30 % über vergleichbaren Gehäusen liegen kann. In Folge der erhöhten Formstabilität kann der erforderliche Materialeinsatz für das Gehäuse weiter reduziert werden.

Weiterhin weist das Gehäuse eine Blechdicke und die Erhebungen eine Höhe, gemessen ausgehend von der Randkontur, auf, wobei die Höhe maximal dem 4-fachen der Blechdicke, bevorzugt maximal dem 3-fachen und besonders bevorzugt maximal dem 2-fachen der Blechdicke, entspricht. Die Blechdicke liegt hierbei deutlich oberhalb der der Strukturfolie, z. B. in einem Bereich von 0,6 bis 2,0 mm (Millimeter), insbesondere im Bereich um 0,8 bis 1,5 mm.

Mit Wabenkörper ist hier insbesondere ein von einem Fluid in einer bevorzugten Strömungsrichtung durchströmbarer monolithischer Wabenkörper mit einer anströmseitigen Stirnseite und einer davon beabstandeten abströmseitigen Stirnseite gemeint, wobei der Wabenkörper z. B. aus lagenweise angeordneten, zumindest teilweise strukturierten Blechen besteht, welche (etwa) in Strömungsrichtung verlaufene Kanäle von durch eine Wellung eines Teils der Bleche bestimmten Dimension bilden. In diesem Fall umfasst der Wabenkörper im Wesentlichen nur metallische Komponenten, also sind Gehäuse und Wabenstruktur mit Blechen gebildet. Im Rahmen dieser Erfindung können aber auch Wabenkörper aus wenigstens teilweise keramischen Materialien eingesetzt werden, die zum Aufbau der Wabenstruktur Verwendung finden.

Das Gehäuse bildet hierbei regelmäßig die äußere Umfangsfläche des Wabenkörpers und nimmt wenigstens eine Wabenstruktur in sich auf, so dass eine von einem Fluid durchströmbare Wabenstruktur gebildet ist. Das in dem Wabenkörper angeordnete Blechmaterial ist in wenigstens einem Abschnitt seiner Fläche durch Erhebungen gekennzeichnet, die von einer Randkontur jeweils umgeben werden. Eine Erhebung ist (im Querschnitt) insbesondere ein Buckel, ein Berg, eine Wölbung oder der gleichen, wobei bevorzugt ein (lokal begrenztes) Maximum der Erhebung in einem zentralen Bereich der Erhebung (mit gleichmäßigem Abstand hin zu allen Randkonturen) vorhanden ist - also insbesondere kein großflächiges Plateau gestaltet ist. Ganz besonders bevorzugt sind alle Erhebungen in dem Abschnitt hinsichtlich ihrer Fläche, Höhe und Form gleich. Damit ist des Weiteren auch gemeint, dass die Erhebungen durch die Randkontur eingeschlossen werden bzw. dass die Erhebungen gegenüber der Randkontur innen liegend angeordnet sind. Die Erhebungen können dabei beliebige Umfangs- bzw. Randkonturen aufweisen, insbesondere können sie dreieckig, viereckig, fünfeckig, im Übrigen auch vieleckig oder aber rund, oval oder ähnlich ausgeführt sein. Somit bilden die Randkonturen einen geschlossen Umfang für jede Erhebung und stellen eine Art (linienförmige) Begrenzung zwischen (direkt) benachbarten Erhebungen dar.

Innerhalb des Abschnitts sind die Erhebungen bevorzugt nur durch die Randkontur selbst getrennt und aneinander anliegend angeordnet, so dass insbesondere durch die Randkontur und die Erhebungen z. B. eine periodische, regelmäßige, sich wiederholende Struktur gebildet ist. Dabei ist je nach Ausgestaltung der Form der Erhebung jede einzelne Erhebung zu wenigstens einer, zwei oder auch mehreren Erhebungen unmittelbar benachbart. So können beispielsweise bei einer achteckigen Ausführung der Erhebungen bis zu acht weitere Erhebungen in unmittelbarer Nähe der ersten Erhebung angeordnet sein, nur getrennt durch die die betrachtete Erhebung umgebende Randkontur.

Dabei weisen die Flächen der Erhebungen gemessen an der Gesamtfläche des Abschnittes, in der die Erhebungen und die Randkonturen angeordnet sind, einen Flächenanteil von der Gesamtfläche des Abschnitts von zumindest 80 % auf. Insbesondere ist der Flächenanteil der Erhebung gegenüber der Gesamtfläche des Abschnitts größer als 85 %, bevorzugt größer als 90 % und besonders bevorzugt größer als 95 % der Gesamtfläche des Abschnitts. Damit ist klar, dass der bei weitem überwiegende Anteil der Fläche des Abschnitts (der sich bevorzugt über die gesamte Oberfläche des Blechmaterials erstreckt) mit den Erhebungen gebildet ist, die Randkontur also nur streifen und/oder linienförmig ausgestaltet ist.

Der Effekt dieser Anordnung von Erhebungen und Randkonturen auf dem Blechmaterial ist z. B. eine Versteifung des Blechmaterials gegenüber anderen strukturierten oder auch glatten Blechmaterialien, die sonst für Wabenkörper eingesetzt werden. Durch die dreidimensionale Struktur des Blechmaterials in Form von Erhebungen und Randkonturen ergibt sich eine äußerst biege- und formsteife Struktur und ermöglicht somit eine Ausführung des Blechmaterials mit vergleichsweise geringer Materialstärke. Gleichzeitig ergeben sich für einen Wabenkörper bei Verwendung dieses Blechmaterials günstige akustische Eigenschaften während des Einsatzes in der Abgasanlage, weil insbesondere eine Dämpfung der Tiefenresonanz erfolgt. Insbesondere werden durch ein derart strukturiertes Blechmaterial Frequenzen des Abgassystems in einem Bereich bis zu 500 Hertz und kleiner gedämpft. Weiterhin ergibt sich durch das Blechmaterial eine hohe thermische Stabilität des Wabenkörpers, da insbesondere Spannungen aus der Wärmedehnung durch die dreidimensionale Struktur des Blechmaterials kompensiert werden können.

Das Blechmaterial mit Erhebungen und umgebenden Randkonturen hat bevorzugt nur linien- und/oder punktförmige Berührstellen mit anderen Komponenten, bzw. Blechfolien des erfindungsgemäßen Wabenkörpers. Auf der Seite des Blechmaterials, auf welcher die Randkonturen die am weitesten aus der Blechebene hervortretenden Punkte der Blechmaterials darstellen sind die Berührstellen dabei bevorzugt linienförmig, während sie auf der Seite des Blechmaterials, auf welcher die Erhebungen am weitesten aus der Blechebene hervortreten bevorzugt punktförmig ausgebildet sind. Insbesondere treten bevorzugt keine flächigen Kontaktstellen der Blechfolie mit anderen Komponenten, bzw. Blechfolien des erfmdungsgemäßen Wabenkörpers auf.

Gemäß einer weiteren vorteilhaften Ausgestaltung des Wabenkörpers liegt in dem Abschnitt, der Erhebungen und diese umgebende Randkonturen aufweist, ein einheitlicher Umformgrad des Blechmaterials vor. Ein einheitlicher Umformgrad bedeutet hier insbesondere, dass trotz der Umformung eines ursprünglich glatten Blechs hin zu einem Blechmaterial mit Erhebungen und Randkonturen, an allen Stellen des Blechmaterials gleiche Wanddicken vorliegen. Dieses besondere Merkmal des Blechmaterials führt zu einer weiteren Erhöhung der Biege- und Formsteifigkeit bei gleichzeitig geringerer Materialstärke, weil das Material an keiner Stelle innerhalb des Abschnitts Materialschwächungen aufweist. Gleichzeitig weist das so geformte Blechmaterial große Plastifizierungsreserven für weitere Umformungen auf, z. B. für die Umformung zu einer Welllage oder anderen Strukturierungen des Blechmaterials.

Die Umformung des Blechmaterials in einem Abschnitt zu Erhebungen und Randkonturen wird dabei gemäß eines besonderen Verfahrens hergestellt, in dem es im Bereich der Randkontur von einem Werkzeug abgestützt und von außen mit einem Druckmedium belastet wird, so dass sich die Erhebungen im Blechmaterial gegenüber den Randkonturen ausformen. Durch die gleichmäßige Druckbeaufschlagung in Folge eines Druckmediums wird ein gleichmäßiges Fließen des Blechmaterials erreicht, so dass gleiche Materialstärken sowohl im Bereich der Randkontur als auch im Bereich der Erhebungen erreicht werden können. Dabei weist das abstützende Werkzeug im Wesentlichen die Struktur der Randkonturen auf, die sich um die Erhebungen herum erstrecken.

Gemäß einer besonderen Ausgestaltung des Wabenkörpers ist das Blechmaterial eine Strukturfolie zum Aufbau der Wabenstruktur des Wabenkörpers. Damit ist insbesondere gemeint, dass das Blechmaterial lagenweise angeordnet werden kann, um in Strömungsrichtung eines Fluids verlaufende Kanäle zu erzeugen. In diesem Fall ist das Blechmaterial insbesondere zur Beeinflussung des Strömungsverhaltens des Abgases durch die Wabenstruktur eingesetzt.

In Folge der besonderen Strukturierung des Blechmaterials mit Erhebungen und Randkonturen kann auch die Wärme- und Stoffübertragung innerhalb der Wabenstruktur infolge einer selbstinduzierten Strömungsverteilung (Wirbelströmung) des Fluidstromes verbessert werden. Gerade durch Kombination des Blechmaterials mit z. B. glatten Blechfolien werden unterschiedliche Strömungsgeschwindigkeiten innerhalb der jeweiligen Kanäle erzeugt und somit eine Verwirbelungskomponente des durchströmenden Fluids erreicht, die zur Umwandlung einer laminaren in eine turbulente Durchströmung beiträgt und somit den Stofftransport innerhalb eines Kanals unterstützt.

Weiterhin wird durch die besondere Formung des Blechmaterials eine verbesserte Kompensation der Wärmeausdehnung des Materials erreicht. Dieses dehnt sich infolge der dreidimensionalen Struktur mit Erhebungen mit einem großen Flächenanteil insbesondere weniger aus als andere bekannte Blechfolien, so dass auftretende Thermospannungen zwischen Rand- und Kernbereich einer Wabenstruktur verringert werden und somit die Dauerhaltbarkeit des Wabenkörpers hinsichtlich eines mechanischen Versagens optimiert wird.

Weiterhin führt der Einsatz dieses Blechmaterials zu günstigen akustischen Eigenschaften der Metallmatrix bzw. zu einem verbesserten Resonanzverhalten, da das Schwingungs- und Dämpfungsverhalten in Folge der besonderen Strukturierung mit Erhebungen und diesen umgebenden Randkonturen deutlich besser ist als bei vergleichbaren metallischen Wabenstrukturen mit herkömmlichen Blechmaterialien.

Insbesondere ergibt sich eine wesentlich höhere Festigkeit des Blechmaterials bei gleicher Materialstärke gegenüber insbesondere glatten Metalllagen. Diese Festigkeit kann bis zu 30 % über der Festigkeit von glatten oder auch strukturierten Metallfolien liegen.

Zudem kann durch die besonders schonende Umformung des Blechmaterials, das dementsprechend einen einheitlichen Umformgrad im Bereich der Erhebungen und Randkonturen aufweist, eine Mikroschädigung des Blechmaterials (z. B. durch Haarrisse usw.) ausgeschlossen werden.

Durch die sehr gleichmäßige Verformung des Blechmaterials (gleiche Materialstärke nach Umformung) wird weiterhin ermöglicht, dass eine Schädigung von eventuell vorhandenen Oberflächenstrukturen bzw. Beschichtungen weitgehend vermieden werden kann, weil das Material an allen Stellen innerhalb des zu Erhebungen und Randkonturen umgeformten Abschnitts homogen verformt werden kann.

Zudem ergeben sich insbesondere hohe Plastifizierungsreserven für folgende Umformschritte durch diese Umformung, die weitgehend ohne Materialschwächung erfolgt ist.

Gemäß einer weiteren Ausgestaltung des Wabenkörpers ist wenigstens eine erste Wand wenigstens eines Kanals der Wabenstruktur des Wabenkörpers zumindest teilweise durch die Strukturfolie gebildet und weiter wird wenigstens eine zweite Wand des Kanals wenigstens teilweise wenigstens durch ein Element aus der Gruppe Welllage, Glattlage und Flies gebildet.

Durch eine solche Ausgestaltung von wenigstens einzelnen Kanälen einer Wabenstruktur eines Wabenkörpers wird erreicht, dass in Wandnähe der Kanäle unterschiedliche Strömungsgeschwindigkeiten eines durchströmenden Fluids erzeugt werden. Dabei erhöht sich die Geschwindigkeit im Bereich des Blechmaterials, das Erhebungen und Randkonturen aufweist, so dass insbesondere bei einer gegenüberliegenden glatten Kanalwand eine "wellenartige" Querverwirbelung des Abgases erzeugt und somit eine permanente Vermischung des Fluidstroms erreicht wird. Dadurch wird insbesondere der Stofftransport durch Erhöhung des Schadstoff- und Konzentrationsgefälles zwischen Kanal und Kanalwand verbessert.

Insbesondere kann das Blechmaterial und/oder auch das hier angeführte (insbesondere metallische) Element eine Beschichtung aufweisen, die insbesondere katalytisch aktiv ist, und welche zur Umsetzung von Schadstoffen im Abgasstrom geeignet sind.

Gemäß einer weiteren vorteilhaften Ausgestaltung des Wabenkörpers weist die Strukturfolie und/oder das Element Öffnungen auf und ist frei von Einbauten. Durch Öffnungen (Löcher, Poren, etc. - bevorzugt jedoch mit einem Querschnitt von mindestens einem Quadratmillimeter oder sogar Quadratzentimeter) innerhalb der Strukturfolie bzw. innerhalb des Elementes wird die Durchmischung des Fluidstroms auch über die einzelnen Kanäle hinweg gefördert. Insbesondere kann so eine homogene Verteilung des Fluidstroms bzw. der Schadstoffverteilung innerhalb des Wabenkörpers erreicht werden. Gleichermaßen kann auf in den Kanal hineinragende Einbauten verzichtet werden, wie z. B. auf Leitschaufeln oder dergleichen. Damit wird eine turbulente Strömung erreicht, ohne das ein signifikanter Druckabfall über den Kanal auftritt. Der Einsatz des Blechmaterials als Strukturfolie zum Aufbau der Wabenstruktur erübrigt somit den Einsatz von zusätzlichen Einbauten, die zu einer Verwirbelung, Durchmischung, Ablenkung usw. des Fluidstroms geeignet wären.

Neben den hinsichtlich des Einsatzes des Blechmaterials als Strukrturfolie beschriebenen Vorteilen ergibt sich gerade bei dem Einsatz als Gehäuse eine günstige akustische Beeinflussung der Abgasreinigungskomponenten. Gerade hier kommt es zu einer Dämpfung der Tiefenresonanz im Bereich von 0 bis zu 500 Hertz. Dabei ist die Strukturierung des Blechmaterials in einem Abschnitt so ausgestaltet, dass diese sich in einem axialen Bereich des Gehäuses über den gesamten Umfang erstreckt und in Umfangsrichtung periodisch angeordnet ist.

Periodisch angeordnet bedeutet hierbei insbesondere, dass die Struktur aus Erhebungen und Randkonturen des Blechmaterials in Umfangsrichtung durchgehend ohne Unterbrechung oder Fehlstellen angeordnet ist, so dass keine aperiodischen Strukturen in Umfangsrichtung vorliegen.

Das Gehäuse weist insbesondere an einer oder an beiden Stirnseiten eine in Umfangsrichtung glatte Oberfläche auf, so dass eine möglichst einfache Anbindung an weitere Abgasreinigungskomponenten mit entsprechenden Flanschen möglich ist, z. B. Abgasleitungen.

Bevorzugt sind die Erhebungen des Blechmaterials ins Innere des Gehäuses gerichtet, so dass eine Zwischenlage oder eine Wabenstruktur oder andere Mittel in den Bereichen der Extrema der Erhebungen mit dem Gehäuse verbunden werden können. Weiterhin kann auch eine Wabenstruktur, ggf. auch mit eigenem Gehäuse, in einem kleineren Querschnitt des erfindungsgemäßen Gehäuses angeordnet sein, so dass sich zwischen dem Gehäuse aus dem erfindungsgemäßen Blechmaterial und der Wabenstruktur ein Hohlraum ergibt. Bei nach innen gerichteten Wölbungen des erfindungsgemäßen Blechmaterials als Gehäuse sind insbesondere punktförmige Kontaktstellen mit den Metallfolien, bzw. Lagen, welche die Kanalstruktur des Wabenkörpers bilden, ausgebildet. Wenn die Erhebungen des Blechmaterials als Gehäuse nach außen gerichtet sind, liegen bevorzugt linienförmige Kontaktstellen mit den Metallfolien, bzw. Lagen, welche die Kanalstruktur des Wabenkörpers bilden, vor.

Die erfindungsgemäße Verwendung des erfindungsgemäßen Wabenkörpers, auf die sich die Erfindung ferner richtet, ist dadurch gekennzeichnet, dass der Wabenkörper als Partikelabscheider oder Katalysatorträgerkörper zur Abgasbehandlung von Verbrennungskraftmaschinen eingesetzt wird. Dabei kann der Wabenkörper ebenfalls als beschichteter Partikelabscheider eingesetzt werden.

Des Weiteren ist die Erfindung auf ein Kraftfahrzeug gerichtet, das einen erfindungsgemäßen Wabenkörper aufweist.

Die Erfindung sowie das technische Umfeld werden nachfolgend anhand der Figuren näher erläutert. Es ist darauf hinzuweisen, dass die Figuren besonders bevorzugten Ausführungsvarianten der Erfindung zeigen, auf diese jedoch nicht beschränkt sind. Es zeigen (schematisch):
- Fig. 1:: einen Wabenkörper mit einem Gehäuse mit erfindungsgemäßem Blechmaterial,
- Fig. 2:: einen Querschnitt durch das Gehäuse der Fig. 1, und
- Fig. 3:: einen von einem Fluid durchströmten Kanal einer Wabenstruktur.

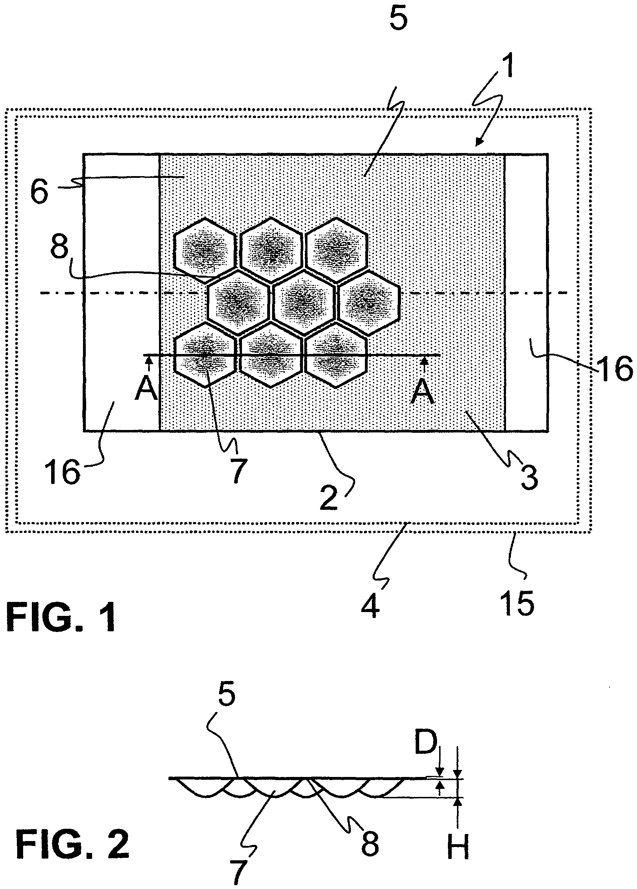

Fig. 1 zeigt schematisch einen Wabenkörper 1 als Komponente innerhalb eines Abgasreinigungssystems 4 eines (hier nur angedeuteten) Kraftfahrzeuges 15. Der Wabenkörper 1 ist hier mit einem Gehäuse 2 und einer innerhalb des Gehäuses 2 angeordneten Wabenstruktur 3 (hier nur angedeutet) gebildet. In diesem Fall ist das Gehäuse mit einem Blechmaterial 5 gebildet, dass Erhebungen 7 und eine regelmäßige Randkontur 8 aufweist (nur teilweise veranschaulicht).

Das Gehäuse 2 weist dabei einen in Umfangsrichtung des Gehäuses 2 umlaufenden Abschnitt 6 auf, innerhalb dem das Blechmaterial 5 nur aus den Erhebungen 7 und den Randkonturen 8 gebildet ist. Dabei umschließen die Randkonturen 8 die Erhebung 7 jeweils vollumfänglich. Der Abschnitt 6 schließt zu den Anschlussbereichen 16 des Gehäuses 2 mit einer verbreiterten Randkontur 8 ab. Die hier gewählte Ausformung der Erhebungen 7 und der Randkonturen 8 wird exemplarisch durch den Querschnitt entlang der Linie A - A (Fig. 1) in Figur 2 veranschaulicht. Jedenfalls beträgt der Flächenanteil der Erhebungen 7 in dem Abschnitt 6 zumindest 80 % (Gesamtfläche weniger Randkontur).

Fig. 2 zeigt schematisch einen Querschnitt entlang der Linie A - A aus Fig. 1 durch das Gehäuse 2 eines Wabenkörpers 1. Dabei weist das Blechmaterial 5 innerhalb des Abschnitts 6 Erhebungen 7 und Randkonturen 8 auf, die die Erhebungen 7 jeweils voneinander trennen und diese gleichzeitig vollumfänglich umschließen. Die Randkonturen sind gegenüber den Erhebungen 7 weitestgehend flach und insbesondere eben ausgeführt, wobei sie natürlich der jeweiligen äußeren Form des Gehäuses 2 angepasst sind.

Das Blechmaterial 5 weist hierbei eine Dicke D und die Erhebungen 7 des Blechmaterials 5 eine Höhe H auf, die von der der Erhebung 7 zugewandten Seite des Blechmaterials 5 bis zur äußeren Blechoberfläche des Blechmaterials 5 der Erhebung 7 gemessen wird. In Fig. 2 wird deutlich, dass gemäß einer besonders vorteilhaften Ausführungsform des Blechmaterials 5 die Erhebungen 7 in Umfangsrichtung des Gehäuses 2 gegeneinander versetzt angeordnet sind, so dass eine hohe Biegesteifigkeit bzw. Formsteifigkeit des Gehäuses 2 erreicht wird.

Die Erhebungen 7 und Randkonturen 8 erstrecken sich bei dem Gehäuse 2 gemäß den Fig. 1 und 2 innerhalb eines axial begrenzten Abschnitts 6 über den gesamten Umfang des Gehäuses 2, wobei die periodische Anordnung der Erhebungen 7 und Randkonturen 8 in Umfangsrichtung nicht unterbrochen ist.

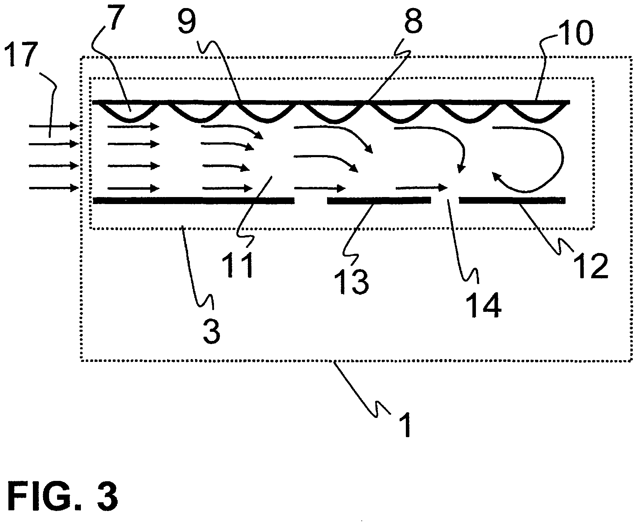

Fig. 3 zeigt schematisch einen von einem Abgasstrom 17 durchströmten Kanal 11 einer Wabenstruktur 3 innerhalb eines Wabenkörpers 1. Der Kanal 11 wird mit verschiedenen Wänden gebildet und weist an einer ersten Wand 10 eine Strukturfolie 9 auf, die Erhebungen 7 und Randkonturen 8 in wenigstens einem Teilbereich der Kanalwand hat. Die hier gegenüberliegend angeordnete zweite Wand 12 des Kanals 11 wird durch ein metallisches Element 13 gebildet, welches z. B. eine Glattlage (nach Art einer Metallfolie), eine Welllage (nach Art einer Metallfolie) oder auch ein Vlies (aus Drahtfilamenten) sein kann. Diese ist insbesondere gegenüber der strukturierten Strukturfolie 9 glatt bzw. eben bzw. unstrukturiert ausgeführt. In Folge dieser Anordnung bilden sich innerhalb des Kanals 11 unterschiedliche Strömungsgeschwindigkeiten und Strömungsverläufe des Abgasstromes 17 aus, die durch die unterschiedlichen Pfeillängen und Pfeilrichtungen in Figur 3 verdeutlicht sind. Dabei beschleunigt der Abgasstrom 17 im Bereich der ersten Wand 10 des Kanals 11, die durch die Strukturfolie 9 gebildet wird, so dass eine Ablenkung des Abgasstroms 17 in Richtung der zweiten Wand 12 erfolgt. Durch die Erhebungen 7 der Strukturfolie 9 wird die Umwandlung einer laminaren in eine turbulente Durchströmung unterstützt. Es wird dabei insbesondere eine wellenartige Wirbelströmung des Abgasstroms 17 innerhalb des Kanals 11 erzeugt und dadurch eine Verbesserung des Stofftransports des Abgasstroms 17 zwischen Kanal 11 und den ggf. beschichteten Kanalwänden (10, 12) bewirkt.

Zusätzlich ist das Element 13 mit einer Mehrzahl von über die Kanallänge verteilten Öffnungen 14 versehen, die eine Vermischung des Abgasstroms 15 zwischen einzelnen, ansonsten durch die Wände (10, 12) (ggf. strömungstechnisch) getrennten, Kanälen 11 ermöglichen und so zu einer Homogenisierung des Abgasstroms 17 über den gesamten Querschnitt der Wabenstruktur 3 beitragen.

Die vorliegende Erfindung ist nicht auf die dargestellten Ausführungsbeispiele beschränkt. Es sind vielmehr zahlreiche Abwandlungen der Erfindung im Rahmen der Patentansprüche möglich.

### Bezugszeichenliste

- 1: Wabenkörper
- 2: Gehäuse
- 3: Wabenstruktur
- 4: Abgasreinigungssystem
- 5: Blechmaterial
- 6: Abschnitt
- 7: Erhebungen
- 8: Randkontur
- 9: Strukturfolie
- 10: Erste Wand
- 11: Kanal
- 12: Zweite Wand
- 13: Element
- 14: Öffnungen
- 15: Kraftfahrzeug
- 16: Anschlussbereich
- 17: Abgasstrom

- H: Höhe
- D: Blechdicke

## Patentansprüche

1. Wabenkörper (1) mit wenigstens einem Gehäuse (2) und einer Wabenstruktur (3) für ein Abgasreinigungssystem (4) aufweisend zumindest ein Blechmaterial (5), wobei das Blechmaterial (5) eine Strukturfolie (9) zum Aufbau der Wabenstruktur (3) des Wabenkörpers (1) ist und/oder das Gehäuse (2) des Wabenkörpers (1) bildet. wobei das Blechmaterial (5) in einem Abschnitt (6). der sich über die gesamte Oberfläche des Blechmaterials (5) erstreckt, Erhebungen (7) und eine die Erhebungen (7) umgebende Randkontur (8) aufweist, **dadurch gekennzeichnet, dass** ein Flächenanteil der Erhebungen (7) in dem Abschnitt (6) zumindest 80 % beträgt und das Blechmaterial (5) und/oder das Gehäuse (2) eine Blechdicke (D) und die Erhebungen (7) eine Höhe (H), gemessen ausgehend von der Randkontur (8), aufweisen, wobei die Höhe (H) maximal dem vierfachen der Blechdicke (D) entspricht.

2. Wabenkörper (1) nach Patentanspruch 1, wobei in dem Abschnitt (6), der Erhebungen (7) und diese umgebende Randkonturen (8) aufweist, ein einheitlicher Umformgrad des Blechmaterials (3) vorliegt.

3. Wabenkörper (1) nach Patentanspruch 1 oder 2, wobei wenigstens eine erste Wand (10) wenigstens eines Kanals (11) der Wabenstruktur (3) des Wabenkörpers (1) zumindest teilweise durch die Strukturfolie (9) gebildet ist und weiter wenigstens eine zweite Wand (12) des Kanals (11) wenigstens teilweise wenigstens durch ein Element (13) aus der Gruppe Welllage, Glattlage und Vlies gebildet ist.

4. Wabenkörper (1) nach einem der vorhergehenden Patentansprüche , wobei die Strukturfolie (9) und/oder das Element (13) Öffnungen (14) aufweist und frei von Einbauten ist.

5. Wabenkörper (1) nach einem der vorhergehenden Patentansprüche. wobei die Randkonturen (8) einen geschlossenen Umfang für jede Erhebung (7) bilden sowie streifenförmig und/oder linienförmig nach Art einer Begrenzung zwischen benachbarten Erhebungen ausgebildet sind.

6. Wabenkörper (1) nach Patentanspruch 5, wobei die Erhebungen (7) Randkonturen (8) aufweisen, die dreieckig, viereckig, fünfeckig oder vieleckig ausgeführt sind.

7. Wabenkörper (1) nach Patentanspruch 5 oder 6, wobei alle Erhebungen (7) in dem Abschnitt (6) hinsichtlich ihrer Fläche, Höhe und Form gleich sind.

8. Verwendung des Wabenkörpers (1) nach einem der vorhergehenden Patentansprüche als Partikelabscheider oder Katalysatorträgerkörper zur Abgasbehandlung von Verbrennungskraftmaschinen.

9. Kraftfahrzeug (15), aufweisend einen Wabenkörper (1) nach einem der Patentansprüche 1 bis 7.

## Claims

1. Honeycomb body (1) having at least one housing (2) and a honeycomb structure (3) for an exhaust-gas purification system (4), comprising at least one sheet metal material (5), wherein the sheet metal material (5) is a structured foil (9) for constructing the honeycomb structure (3) of the honeycomb body (1) and/or forms the housing (2) of the honeycomb body (1), wherein the sheet metal material (5) having, in at least one portion (6) which extends over the entire surface of the sheet metal material (5), elevations (7) and an edge contour (8) which surrounds the elevations (7), **characterized in that** an area percentage of the elevations (7) in the at least one portion (6) amounting to at least 80% and the sheet metal material (5) and/or the housing (2) having a sheet metal thickness (D) and the elevations (7) having a height (H) measured from the edge contour (8), wherein the height (H) corresponding to at most six times the sheet metal thickness (D).

2. Honeycomb body (1) according to claim 1, wherein a uniform degree of deformation of the sheet metal material (3) is present in the portion (6) which has the elevations (7) and the edge contours (8) surrounding said elevations (7).

3. Honeycomb body (1) according to claim 1 or 2, wherein at least one first wall (10) of at least one channel (11) of the honeycomb structure (3) of the honeycomb body (1) is formed at least partially by the structured foil (9), and furthermore at least one second wall (12) of the channel (11) is formed at least partially by at least one element (13) from the group of corrugated layer, smooth layer and nonwoven.

4. Honeycomb body (1) according to one of the preceding claims, wherein the structured foil (9) and/or the element (13) has openings (14) and is free from fittings.

5. Honeycomb body (1) according to one of the preceding claims, wherein the edge contours (8) form a closed embracing for each elevation (7) and are constructed stripe-shaped and/or line-shaped in the manner of a boundary between adjacent elevations.

6. Honeycomb body (1) according to claim 5, wherein the elevations (7) have edge contours (8) which are constructed triangular, quadrangular, pentagonally or polygonally.

7. Honeycomb body (1) according to claim 5 or 6, wherein all elevations (7) in the portion (6) are equal with respect to their area, height and shape.

8. Use of the honeycomb body (1) according to one of the preceding claims as a particle separator or catalytic converter support body for the exhaust-gas aftertreatment of internal combustion engines.

9. Motor vehicle (15) having a honeycomb body (1) according to one of claims 1 to 7.

## Revendications

1. Corps en nids d'abeilles (1) avec au moins un boîtier (2) et une structure en nids d'abeilles (3) pour un système d'épuration de gaz d'échappement (4) ayant au moins un matériau de tôle (5), le matériau de tôle (5) étant une feuille structurée (9) pour la construction de la structure en nids d'abeilles (3) du corps en nids d'abeilles (1) et/ou forme le boîtier (2) du corps en nids d'abeilles (1), le matériau en tôle (5) étant une feuille structurée (9) pour la construction de la structure en nids d'abeilles (3) du corps en nids d'abeilles (1) et/ou forme le boîtier du corps en nids d'abeilles, le matériau de tôle (5) ayant des élévations (7) dans une section (6) s'étendant sur toute la surface du matériau de tôle (5) et ayant un contour de bord (8) entourant les élévations (7), **caractérisé en ce qu'**une part de surface des élévations (7) dans la section (6) fait au moins 80 % et le matériau de tôle (5) et/ou la boîtier (2) ont une épaisseur de tôle (D) et les élévations (7) une hauteur (H), mesuré à partir du contour de bord (8), la hauteur (H) comportant maximalement le quadruple de l'épaisseur de tôle (D).

2. Corps en nids d'abeilles (1) selon la revendication 1, dans quel cas la section (6), qui a des élévations (7) et des contours de bord (8) entourant celles-ci, un taux de déformation uniforme se présente.

3. Corps en nids d'abeilles (1) selon la revendication 1 ou 2, au moins une première paroi (10) d'au moins un canal (11) de la structure en nids d'abeilles (3) du corps en nids d'abeilles (1) est formée au moins partiellement par la feuille structurée (9) et en outre au moins une deuxième paroi (12) du canal (11) est formée au moins partiellement par un élément (13) du groupe, état ondulation, état lisse et non tissé.

4. Corps en nids d'abeilles (1) selon l'une des revendications précédentes, la feuille structurée (9) et/ou l'élément (13) ayant des ouvertures (14) et étant exempt d'objets encastrés.

5. Corps en nids d'abeilles (1) selon l'une des revendications précédentes, les contours de bord (8) formant une circonférence fermée pour chaque élévation (7) et/ou étant réalisés en forme de bande et/ou en forme de ligne du genre d'une limitation entre des élévations adjacentes.

6. Corps en nids d'abeilles (1) selon la revendication 5, les élévations (7) ayant des contours de bord (8) qui sont réalisés de façon triangulaire, quadrangulaire ou polygonale.

7. Corps en nids d'abeilles (1) selon la revendication 5 ou 6, toutes les élévations (7) dans la section(6) étant identiques quant à leur surface, hauteur et forme.

8. Utilisation du Corps en nids d'abeilles (1) selon l'une des revendications précédentes comme séparateur de particules ou corps support de catalyseur pour le traitement de gaz d'échappement de machines à combustion interne.

9. Véhicule automobile (15), étant doté d'un corps en nids d'abeilles (1) selon l'une des revendications 1 à 7.
